(19) **Europäisches Patentamt**

**European Patent Office**

**Office européen des brevets**

(11) Veröffentlichungsnummer: **0 141 863**
**B1**

(12) # EUROPÄISCHE PATENTSCHRIFT

(45) Veröffentlichungstag der Patentschrift:
**11.03.87**

(51) Int. Cl.⁴: **A 47 L 17/08**

(21) Anmeldenummer: **83110805.5**

(22) Anmeldetag: **28.10.83**

(54) Scheuerschwamm und Verfahren zu seiner Herstellung.

(30) Priorität: **02.08.83 DE 3327805**

(43) Veröffentlichungstag der Anmeldung:
**22.05.85 Patentblatt 85/21**

(45) Bekanntmachung des Hinweises auf die Patenterteilung:
**11.03.87 Patentblatt 87/11**

(84) Benannte Vertragsstaaten:
**AT BE CH DE FR GB IT LI LU NL SE**

(56) Entgegenhaltungen:
**DE - A - 1 503 860**
**DE - A - 1 703 721**
**FR - A - 1 457 713**
**GB - A - 945 636**
**US - A - 1 975 451**
**US - A - 3 112 219**
**US - A - 3 428 405**
**US - A - 3 634 901**

(73) Patentinhaber: **Firma Carl Freudenberg, Höhnerweg 4, D-6940 Weinheim/Bergstrasse (DE)**

(72) Erfinder: **Pässler, Michel, Dr., Leonhard Hüttenhofer-Strasse 8, D-8902 Neusäss (DE)**
Erfinder: **Franz, Günter, Ulrichstrasse 57, D-8904 Friedberg/Derching (DE)**
Erfinder: **Reisch, Bruno, Katharinengasse 24, D-8900 Augsburg (DE)**

(74) Vertreter: **Weissenfeld-Richters, Helga, Dr., Höhnerweg 2, D-6940 Weinheim/Bergstrasse (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Scheuerschwamm mit einem Griffteil aus weichem Polyurethanschaum und einem damit verbundenen Scheuerteil aus grobem, gegebenenfalls Schleifmittel enthaltendem Vliesstoff und gegebenenfalls zwischen dem Polyurethanschaum und dem Scheuerteil stellenweise eingelagerter Seife, Reinigungspaste oder dgl.

Scheuerschwämme dieser Art sind bekannt US-A-3 428 405 und werden im Haushalt insbesondere als Topfreiniger oder Badputzer benutzt.

Die meist schleifmittelhaltige Vliesstoffschicht dient dabei als Scheuermedium zum Reinigen von Töpfen, Pfannen und anderem Geschirr. Zum Reinigen von Badewannen und anderen sanitären Einrichtungen werden ebenfalls ähnliche Scheuerschwämme verwendet, deren Scheuerkraft jedoch im allgemeinen milder ist. Zum Reinigen von teflonisierten und anderen empfindlichen Oberflächen werden Scheuerschwämme mit Vliesstoffen ohne zusätzliche Schleifmittel verwendet.

Das Schaumstoffteil dient zum Nachwischen und Aufsaugen und ist als Griff für das daran befestigte Scheuerteil aus Vliesstoff ausgebildet. Zum besseren Hantieren ist das Griffteil an den beiden senkrecht zur Scheuerfläche stehenden Seitenflächen häufig mit Griffrillen versehen, die in den Schaumstoffkörper eingefräst oder ausgebrannt sind.

Die Scheuerschwämme werden üblicherweise dadurch hergestellt, dass fertig vorgebildete Scheuervliesstoffe, d.h. Schleifkörner enthaltende grobe Vliesstoffe und fertig vorgeformte Schaumstoffe miteinander verbunden werden. Der Verbund erfolgt üblicherweise entweder durch Flammkaschieren oder durch Verkleben mit geeigneten Klebstoffen. Bei der Flammkaschierung wird der Schaumstoff in Bahnen über offene Gasflammen geführt, wodurch seine Oberfläche anschmilzt und klebrig wird. Auf die klebrige Oberfläche des Schaumstoffes wird dann die Schleifvliesstoffbahn aufgelegt und durch Anpressen mit dem Schaumstoff fest verbunden. Die Haftfestigkeit derartiger Verbundstoffe ist von zahlreichen Faktoren wie Warengeschwindigkeit, Anpressdruck, Hitze, Oberflächenglätte des Vliesstoffes usw. abhängig.

Häufig lässt die Trennkraft zwischen Schaumstoff und Scheuervliesstoff zu wünschen übrig und im praktischen Gebrauch tritt eine mehr oder weniger rasche Delaminierung der beiden miteinander verklebten Komponenten ein.

Durch Verkleben mit einem geeigneten Klebstoff wird die Haftfestigkeit gegenüber flammkaschierten Produkten zwar erhöht, jedoch ist es nachteilig, dass der Klebstoff meist längere Zeit zum Abbinden benötigt und die Laminate während der Abbindungszeit unter Druck gehalten werden müssen. Man erhält auf diese Weise zwar Scheuerschwämme, die weniger zum Delaminieren neigen, jedoch ist der Herstellungsprozess durch die langen Abbindezeiten und die Klebstoffkosten aufwendig.

Es wird weiterhin als grosser Nachteil beider Verfahren empfunden, dass das Transportvolumen und entsprechend die Transportkosten für den Schaumstoff vom Hersteller zur Laminierstätte gross sind.

Schaumstoffe für den hier vorliegenden Anwendungszweck besitzen in der Regel Raumgewichte von etwa 10 bis 50 kg/m³, d.h. es muss sehr viel Luft transportiert werden.

Der vorliegenden Erfindung liegt die Aufgabe zugrunde, einen Scheuerschwamm zu entwickeln, der auf wirtschaftliche Weise hergestellt werden kann und der einen sehr festen Verbund zwischen Scheuerteil und Griffteil aus Schaumstoff aufweist, so dass sich bei vereinfachter Herstellung eine erhöhte Lebensdauer und bessere Gebrauchseigenschaften ergeben.

Die erfindungsgemässe Aufgabe wird gelöst durch den in den Patentansprüchen wiedergegebenen Aufbau des Scheuerschwammes und durch das im Patentanspruch 4 definierte Herstellungsverfahren.

Das Griffteil des erfindungsgemässen Scheuerschwammes besteht aus Polyurethan-Weichschaum. Für die Herstellung dieses Polyurethanschaumes werden die bekannten Ausgangskomponenten aus Isocyanaten und Polyolen verwendet. Besonders bewährt haben sich z.B. als Isocyanat-Komponenten die Handelsprodukte Desmodur® T 80 der Bayer AG, Leverkusen (Toluylendiisocyanat) und Desmodur® CD der Bayer AG (modifiziertes Diphenylmethandiisocyanat) und als Polyolkomponente die Handelsprodukte Desmophen® 2381 M der Bayer AG (Polyesterpolyol) und Desmophen® 3900 der Bayer AG (Polyätherpolyol).

Der Polyurethanschaum kann in beliebiger Weise und nach üblichen Verfahren hergestellt werden. Gewöhnlich werden zwei Ausgangslösungen hergestellt, deren eine reines Isocyanat und die andere das Polyol und die nötigen Beschleuniger, Vernetzer, Stabilisatoren, Treibmittel und dergleichen und ggf. Farbstoff enthält. Es ist aber auch die Herstellung unter Verwendung von einer, drei oder mehr Ausgangslösungen möglich oder mit anderer Aufteilung der erforderlichen Inhaltsstoffe.

Der Scheuerschwamm wird unter Verwendung des vorstehend beschriebenen, an sich bekannten Polyurethan-Weichschaumstoffes dadurch hergestellt, dass die Komponenten in einem geeigneten Formteil unter Aufschäumen miteinander zur Reaktion gebracht werden und die vorgefertigte gegebenenfalls Schleifmittel enthaltende Vliesstoffbahn des Scheuerteils während des Aufschäumens der Polyurethanmasse mit dieser verbunden wird. Der Vliesstoff erhält durch oberflächliches Einschäumen eine innige Verbindung mit dem Polyurethanschwamm, wobei dieser in der Grenzschicht in die Poren des Vliesstoffes eindringt und nach dem Erhärten eine weitgehend oder vollständig wasserundurchlässige Trennhaut zu dem Scheuerteil ausbildet. Der Polyurethanschaum dringt in der Regel nur teilweise und zwar an der Grenzschicht in den Vliesstoff ein. Falls erwünscht, kann der Vliesstoff jedoch auch ganz von dem Schaum durchdrungen werden. In der Regel bleibt die Scheuerseite des Vliesstoffes jedoch frei von Polyurethanschaum.

Beim Zusammenmischen der Ausgangslösungen des Polyurethanschaumes in den erforderlichen Gewichtsverhältnissen beginnt innerhalb weniger Sekunden unter $CO_2$-Entwicklung ein Aufschäumen der gemischten Masse und nach einigen Minuten hat sich der entstehende Schaum verfestigt. Während dieser Zeit muss der Schleifvliesstoff sofort auf die aufschäumende Masse gelegt werden, wobei sehr rasch der erwünschte feste Verbund eintritt. Das Verfahren gestaltet sich somit ausserordentlich einfach und wirtschaftlich.

Durch geeignete Gestaltung des Formteiles für den Schaumstoff kann das Griffteil beliebig gestaltet werden.

So ist das herkömmliche Ausfräsen bzw. Ausbrennen der Griffleiste nicht mehr notwendig. Der Schleifvliesstoff kann auch beidseitig an den sich bildenden Schaum herangeführt werden. Bei beidseitiger Auflage kann dann der fertige Formkörper als Scheuerschwamm mit zwei Scheuerflächen verwendet werden oder in der Mitte durchgeschnitten werden, so dass je ein Griffteil aus Schaumstoff mit Scheuerteil aus Vliesstoff entsteht.

Der als Scheuerteil verwendete grobe und gegebenenfalls Schleifmittel enthaltende Vliesstoff besteht zweckmässig aus Polyamid- oder Polyesterfasern oder deren Mischungen. Der Vliesstoff wird mit einem Phenolformaldehyd- oder einem Acrylatharz gebunden, das anteilweise auch mit Harnstoff- oder Melaminformaldehydharzen abgemischt sein kann. Als Schleifmittel werden Schleifkörner aus Siliciumdioxid, Aluminiumoxid, Siliciumcarbid oder anderen anorganischen Stoffen bzw. deren Mischungen in unterschiedlichen Mengen zugesetzt. Bevorzugt werden Schleifmittelzusätze bis zu 60 Gew.-%, bezogen auf das Gewicht das Schleifvliesstoffes. Die Schleifkörner sind zweckmässig in dem Bindemittel für die Fasern des Vliesstoffes enthalten.

Eine bevorzugte Ausführung des erfindungsgemässen Scheuerschwammes besteht darin, dass zwischen Griffteil und Scheuerteil stellenweise Seife, Reinigungspaste oder dgl. eingelagert ist. Hierbei ist es wesentlich, dass die auf der dem Vliesstoff zugewandten Oberfläche des Polyurethan-Weichschaumes befindliche Trennhaut weitgehend oder vollständig wasserundurchlässig ist und die Seife, Reinigungspaste oder dgl. zwischen dieser Trennhaut und dem Schleifvliesstoff eingelagert ist.

Ein derartiger «verseifter» Scheuerschwamm bietet erhebliche Vorteile in der Anwendung gegenüber vergleichbaren bekannten Produkten. Die bekannten Scheuerschwämme sind entweder seifenfrei und lösen bei ihrer Handhabung die in Töpfen, Pfannen, Geschirr oder dgl. festsitzenden Verkrustungen aufgrund der rauhen Oberfläche der Scheuervliesseite auf rein mechanische Weise. Der Benutzer verwendet dann zusätzlich chemische Reinigungsmittel um den Ablösevorgang zu erleichtern und beispielsweise Fette und Öle, die sich auf dem Geschirr befinden, zu emulgieren. Die meist flüssigen Reinigungsmittel werden auf das zu reinigende Gut oder auf den Scheuervliesstoff aufgepritzt oder aufgebracht und der Verwender hat somit ausser Wasser und dem Scheuerschwamm in der Regel noch zusätzliche Reinigungsmittel notwendig. Es sind auch schon verseifte Scheuerschwämme bekannt, die eine Seifen- oder Reinigungspasteneinlage enthalten. Diese bekannten verseiften Scheuerschwämme enthalten jedoch nicht die wasserundurchlässige Trennhaut, die beim erfindungsgemässen Herstellungsverfahren zwischen Schwammschicht und Schleifvliesstoff entsteht. Da sowohl das Schwammteil als auch das Scheuerteil mehr oder weniger wasserdurchlässig ist, diffundiert die Seife bzw. Reinigungspaste bei den bekannten Scheuerschwämmen während der Reinigung oder auch bei der Lagerung des nassen oder feuchten Scheuerschwammes nach beiden Seiten durch. Beim Hantieren mit einem derartigen Scheuerschwamm wird dadurch nicht nur auf der Vliesstoffschicht ein Seifenschaum erzeugt, mit dem die Reinigung des Geschirrs erleichtert wird, sondern auch der Schaumstoff wird weitgehend oder ganz durchnässt, so dass eine intensive Schaumbildung auch an der als Handgriff benutzten Stelle auftritt.

Das Austreten von schaumiger und mitunter auch schmieriger Seife durch das Griffteil wird vom Benutzer als ungangenehm empfunden und führt zu einer vorzeitigen Erschöpfung des Seifenvorrats.

Aus der US-A-3 428 405 ist zwar auch schon ein «verseifter» Scheuerschwamm bekannt geworden, der mit einer Folie abgedeckte Seife enthält. Diese Folie soll beim Gebrauch einreissen und die Seife so freigeben. Bei der Einwirkung von Wasser dringt der Seifenschaum aber nach allen Seiten durch und führt zu einem Verschmieren des Griffteils, so dass sich auch hier eine unangenehme Handhabung ergibt.

Die bei dem erfindungsgemässen Scheuerschwamm vorhandene Polyurethanhaut als Trennschicht verhindert nun, dass Seife bzw. Reinigungspaste in unerwünschter Weise in das Griffteil eindringt. Auch nach Beendigung der Reinigungsarbeit, wenn der noch nasse Scheuerschwamm beiseite gelegt wird, dringt kein Wasser aus dem Schwammteil zur Seife, so dass ein weiteres und unnötiges Auflösen von Seife verhindert wird. Der Seifenverbrauch wird somit auf die Zeit der Reinigungsarbeit beschränkt und die Lebensdauer des Scheuerschwammes bezüglich des Seifenzusatzes wird wesentlich erhöht.

Eine sehr zweckmässige Ausführung des Scheuerschwammes mit Seifeneinlagerung besteht darin, dass der Scheuerschwamm zwischen der trennhauthaltigen Schaumschicht und dem Scheuervliesstoff mit von aussen zugänglichen Hohlräumen in Form durchgehender Kanäle versehen ist. In diese Kanäle kann nach dem Verbrauch der ursprünglich eingelagerten Seifenteile neue Seife eingeschoben oder eingespritzt werden. Auf diese Weise ist es auch möglich, verschiedenartige Reinigungspasten, Seifen oder dgl. zu verwenden oder auch zeitweise ohne Seifenzusatz zu arbeiten.

Der kanalartige Hohlraum muss zu dem Schwammteil hin weitgehend oder vollständig abgedichtet sein, während die Seife in die Vliesstoffschicht eindringen soll.

In der Regel genügt die oberflächliche Trennhaut auf dem Polyurethanschaum. Falls erwünscht können zwischen Trennhaut und Vliesstoffschicht jedoch zusätzlich Folien in Form von Bändern oder geeigneten Zuschnitten angebracht werden, wobei deren Breite zweckmässig geringer ist als diejenige des gesamten Scheuerschwammes. Auf diese Weise wird erreicht, dass im Bereich der Seifeneinlagerung eine partielle Abdeckung der Schaumstoffschicht erfolgt. Sowohl die Folie als auch die Seife können

zusammen mit der Vliessstoffschicht beim Aufschäumen des Griffteiles eingebracht werden wie auch nachträglich eingeschoben werden. Reinigungspasten oder sonstige Zusätze können nachträglich eingespritzt werden.

Bei Verwendung von strangförmig auf die Vliesstoffschicht aufgetragener Seife bilden sich automatisch Kanäle zwischen der Trennhaut der Polyurethanschicht und dem Vliesstoff. In diese Kanäle kann dann beim Verbrauch der Seife ein neuer Seifenstrang eingeschoben oder Reinigungspaste bzw. sonstige Zusätze eingespritzt werden. Auch hier kann der Kanal mit Hilfe einer Folie oder dgl. zur Schwammseite hin zusätzlich abgedichtet werden.

In manchen Fällen ist es zweckmässig, ein zusätzlich eingeschobenes Dichtungselement zur Aufnahme von Seife oder sonstigen Zusätzen zwischen Schaumstoff und Schleifvlies einzuschieben.

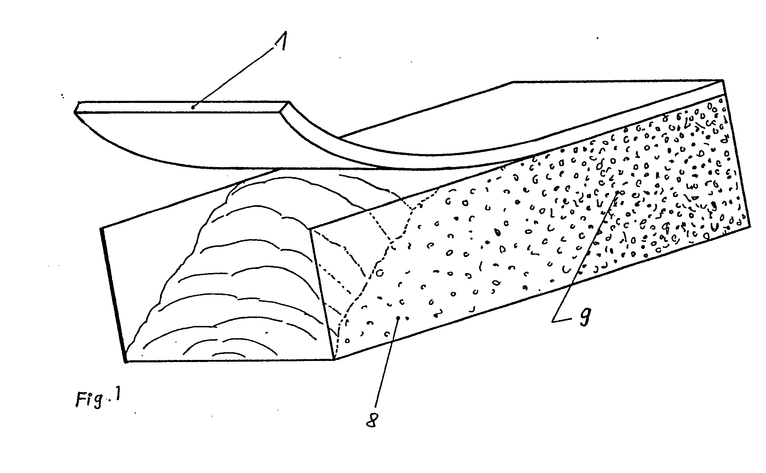

Fig. 1 bis 4 zeigen beispielhafte Ausführungen des erfindungsgemässen Scheuerschwammes.

Fig. 1 zeigt die Herstellung des Scheuerschwammes. Das Gemisch der Ausgangskomponenten für den Schaumstoff ist in einer Wanne gleichmässig ausgegossen. Die aufschäumende PU-Masse 8 verfestigt sich bei 9 und dringt an der Grenzfläche geringfügig in den aufgelegten Scheuervliesstoff 1 ein. Die Eindringtiefe lässt sich durch den Auflagedruck und die Menge an Polyurethanmasse variieren. Wenn sich z.B. am Ende des Aufschäumvorganges in der gemäss Fig. 1 gezeigten Weise ein 51 mm hoher Polyurethanschaum gebildet hat, dann würde der in einem Abstand von 50 mm über dem Boden der Wanne angebrachte Schleifvliesstoff noch 1 mm von dem Schaum durchdrungen.

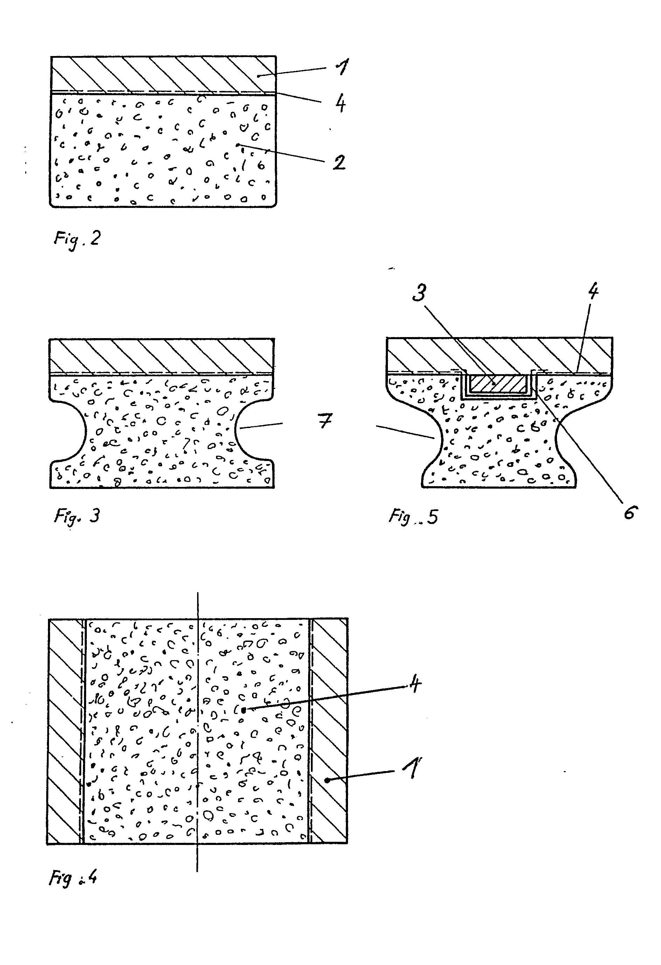

Fig. 2 zeigt den fertig gebildeten Polyurethanschwamm mit teilweise eingeschäumtem Scheuervliesstoff gemäss Fig. 1. An der Grenzlinie des Polyurethanschaumes innerhalb des Vliesstoffes ist die Trennhaut gebildet.

Fig. 3 zeigt eine Ausgestaltung des Verfahrens dahingehend, dass bereits Griffrillen in die Form eingearbeitet sind, in der der Schaumstoff gebildet wird. Der aufgeschäumte und verfestigte Polyurethanschaum enthält dann schon die seitlich verlaufenden Griffrillen, die nicht mehr in separaten Arbeitsgängen durch Ausfräsen oder Ausbrennen hergestellt werden müssen. Auf diese Weise werden erhebliche Mengen an Rohmaterial eingespart.

Fig. 4 zeigt eine Ausführungsform des Verfahrens, bei dem zwei Scheuervliesbahnen senkrecht zueinander in einem gewünschten Abstand mit der mittig angeordneten Schaumstoffmischung verbunden werden. Es wird der bereits fertig aufgeschäumte Schwamm gezeigt. Man sieht die Trennhaut an der Polyurethanschaum-Oberfläche und den Verbund mit dem Vliesstoff, wobei dessen Poren an der Grenzfläche teilweise mit dem Schaumstoff durchdrungen sind. Der erfindungsgemässe Scheuerschwamm wird aus diesem Formkörper durch Zerschneiden in der Mitte erhalten. Es ergibt sich die beschriebene Anordnung bestehend aus Schaumstoff-Griffteil und Scheuervliesstoffschicht. Der Formkörper kann aber auch unzerschnitten als Scheuerschwamm mit zwei Scheuerflächen benutzt werden.

Fig. 5 zeigt einen verseiften Scheuerschwamm. Zur Ausbildung des Schwammes ist eine geformte Wanne vorgesehen. Zwischen der Trennhaut und der Scheuervliesstoffschicht ist eine Folie als zusätzliche Trennschicht eingelegt, die das Schaumstoffteil zusätzlich so abdeckt, dass die Seife beim Benetzen nur in den Scheuervliesstoffteil gelangt. Die zusätzliche Trennschicht ist lediglich an der Stelle angebracht, an welcher sich die Seife befindet.

## Patentansprüche

1. Scheuerschwamm mit einem Griffteil (2) aus weichem Polyurethanschaum und einem damit verbundenen Scheuerteil (1) aus grobem, gegebenenfalls Schleifmittel enthaltendem Vliesstoff und gegebenenfalls mit zwischen dem Polyurethanschaum und dem Scheuerteil stellenweise eingelagerter Seife (3), Reinigungspaste oder dgl., dadurch gekennzeichnet, dass das Griffteil (2) mit dem Scheuerteil (1) durch oberflächliches Einschäumen klebstofffrei verbunden ist, wobei der Polyurethanschaum an seiner dem Vliesstoff zugewandten Fläche (4) eine weitgehend oder vollständig wasserundurchlässige Trennhaut (5) aufweist und die Poren des Vliesstoffes wenigstens in dessen Grenzschicht von dem Polyurethanschaum durchdrungen sind.

2. Scheuerschwamm nach Anspruch 1, dadurch gekennzeichnet, dass eine Folie (6) zwischen der Seife (3), Reinigungspaste oder dgl. und der Trennhaut (5) des Polyurethanschaumes angeordnet ist.

3. Scheuerschwamm nach einem der Ansprüche 1 oder 2, dadurch gekennzeichnet, dass gegebenenfalls kanalartig durchgehende Hohlräume zur Aufnahme von Seife (3), Reinigungspaste oder dgl. zwischen der Trennhaut (5) des Polyurethanschaumes und dem Scheuerteil (1) aus Vliesstoff vorgesehen sind.

4. Verfahren zur Herstellung eines Scheuerschwammes nach einem der Ansprüche 1 bis 3, dadurch gekennzeichnet, dass das zur Herstellung des Polyurethanschaumes vorgesehene Komponentengemisch aus Isocyanaten, Polyolen und gegebenenfalls vorgesehenen Zusätzen in einem Formteil miteinander zur Reaktion gebracht wird und der gegebenenfalls Schleifmittel enthaltende, grobe Vliesstoff klebstofffrei mit dem aufschäumenden Polyurethanschaum verbunden wird, wobei wenigstens an der Grenzfläche des Vliesstoffes dessen Poren von dem Polyurethanschaum durchdrungen werden, so dass nach dem Verfestigen des Polyurethanschaumes ein dauerhafter Verbund entsteht, wobei gegebenenfalls zwischen der Trennhaut des Polyurethanschaumes und dem Vliesstoff stellenweise Seife, Reinigungspaste oder dgl. mit oder ohne Folie zwischen Seite, Reinigungspaste oder dgl. der Trennhaut des Polyurethanschaumes angeordnet und gleichzeitig eingeschäumt werden.

## Claims

1. A scouring sponge having a handle portion (2) of soft polyurethane foam and a scouring portion (1) joined thereto and consisting of a coarse nonwoven, which may contain an abrasive, and optionally provided with soap (3) or with a cleansing paste or the like incorporated at some points between the polyurethane foam and the scouring portion, characterised in that the handle portion (2) is joined to the scouring portion (1) by superficial foaming-in without adhesive, the polyurethane foam having a largely or completely water-impermeable separating skin (5) on its surface (4) facing the nonwoven, and the pores of the nonwoven being penetrated at least in its boundary layer by the polyurethane foam.

2. A scouring sponge according to claim 1, characterised in that a film (6) is provided between the soap (3) or the cleansing paste or the like and the separating skin (5) of the polyurethane foam.

3. A scouring sponge according to claim 1 or 2, characterised in that cavities for receiving soap (3), cleansing paste or the like are provided between the separating skin (5) of the polyurethane foam and the scouring portion (1) of nonwoven, said cavities being optionally in the form of channels passing through the sponge.

4. Process for the manufacture of a scouring sponge according to one of claims 1 to 3, characterised in that the component mixture which is intended for the preparation of the polyurethane foam and contains isocyanate, polyol and optional additive(s) is reacted in a mould, and the coarse nonwoven, optionally containing abrasive, is joined without adhesive to the polyurethane foam which foams up, the pores of the nonwoven being penetrated at least at its boundary surface by the polyurethane foam so that a permanent bond is produced after solidification of the polyurethane foam, soap or a cleansing paste or the like being optionally arranged at some points between the separating skin of the polyurethane foam and the nonwoven with or without a film between the soap or the cleansing paste or the like and the separating skin of the polyurethane foam, and being foamed in simultaneously.

**Revendications**

1. Eponge à récurer avec une poignée (2) en mousse de polyuréthane souple et une partie servant à récurer (1) fixée à celle-ci et constituée d'une nappe de fibres grossières contenant éventuellement un abrasif, avec éventuellement du savon (3), une pâte à nettoyer ou un produit analogue inséré par endroits entre la mousse de polyuréthane et la partie servant à récurer, caractérisée en ce que la poignée (27 est fixée à la partie servant à récurer (1) sans utiliser d'adhésif et par pénétration superficielle de la mousse, la mousse de polyuréthane présentant, sur sa surface (4) avoisinant la nappe de fibres, une pellicule séparatrice (5) largement ou complètement imperméable à l'eau, tandis que les pores de la nappe de fibres sont pénétrées, au moins dans la couche limite, par la mousse de polyuréthane.

2. Eponge à récurer selon la revendication 1, caractérisée en ce qu'une pellicule (6) est disposée entre le savon (3), la pâte à nettoyer ou le produit analogue et la pellicule séparatrice (5) de la mousse de polyuréthane.

3. Eponge à récurer selon l'une des revendications 1 ou 2, caractérisée en ce que des cavités en forme de canaux et allant de part en part sont prévues, éventuellement, pour recevoir le savon (3), la pâte à nettoyer ou tout produit analogue, entre la pellicule séparatrice (5) de la mousse de polyuréthane et la partie (1) en nappe de fibres servant à récurer.

4. Procédé pour la production d'une éponge à récurer selon l'une des revendications 1 à 3, caractérisé en ce que le mélange des composants utilisés pour la production de la mousse de polyuréthane est constitué d'isocyanates, de polyols et, éventuellement, d'additifs prévus à cet effet, qui sont mis à réagir ensemble dans un moule, tandis que la nappe de fibres grossières et contenant, éventuellement, un abrasif, est fixée à la mousse de polyuréthane pendant la formation de cette mousse, les pores de cette nappe étant pénétrés par la mousse de polyuréthane au moins dans la zone limite, si bien qu'après le durcissement de la mousse de polyuréthane on obtient un assemblage durable, tandis qu'un savon, une pâte à nettoyer ou un produit analogue peut être disposé éventuellement par endroits, entre la pellicule séparatrice de la mousse de polyuréthane et la nappe de fibres et être enrobé par la mousse en même temps que se forme cette pellicule séparatrice.

Fig. 1

0 141 863

Fig. 2

Fig. 3

Fig. 5

Fig. 4

9